# EUROPÄISCHE PATENTSCHRIFT

(11) **EP 1 293 114 B1**
(45) Veröffentlichungstag und Bekanntmachung des Hinweises auf die Patenterteilung: **17.11.2004**
(21) Anmeldenummer: 02019696.0
(22) Anmeldetag: 04.09.2002
(51) Int. Cl.: A01C 17/00, A01C 7/10

(54) **Verteilmaschine mit einem System zum automatischen Beseitigen der Verstopfungen**
Spreader machine with system for automatic removal of obstructions
Epandeur agricole avec système pour l'élimination automatique d'obstructions

(30) Priorität: 15.09.2001 DE 10145593; 22.08.2002 DE 10238395
(43) Veröffentlichungstag der Anmeldung: 19.03.2003
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Dreyer, Justus, Dipl.-Ing., 49205 Hasbergen (DE)

(56) Entgegenhaltungen:
- EP-A- 0 963 690
- DE-A- 19 808 764
- DE-B- 1 219 280
- US-A- 4 277 022

## Beschreibung

Die Erfindung betrifft eine Verteilmaschine gemäß des Oberbegriffes der Patentanspruches 1.

Die EP-A-09 63 690 zeigt einen Schleuderdüngerstreuer gemäß des Oberbegriffes des Patentanspruches 1. Bei diesem Schleuderdüngerstreuer ist eine Überwachungseinrichtung mit Sensoreinrichtung, mittel welchem eine Verstopfung der Öffnung zu erkennen ist, wobei bei diesem bekannten Stand der Technik bei einer Änderung der Ausbringmenge oder bei einer Unterbrechung der ausfließenden Massenstromes die Streuarbeit unterbrochen werden muss.

Ein weiterer Schleuderdüngerstreuer ist beispielsweise in der deutschen Offenlegungsschrift 198 57 408 beschrieben. Bei diesem Schleuderdüngerstreuer ist ein Drehmomentsensor an der Schleuderscheibenantriebswelle angeordnet. Dieser Drehmomentsensor erfass das Drehmoment. Unter Verwendung des ermittelten Drehmomentes wird mittels eines Auswerteprogramms der ausgebrachte Massestrom ermittelt. Hierdurch lässt sich die tatsächliche Streudichte ermitteln und über eine Einstellvorrichtung die gewünschte Streudichte einstellen.

Ein weiterer Schleuderdüngerstreuer ist in der deutschen Offenlegungsschrift 44 17 549 beschrieben. Bei diesem Schleuderdüngerstreuer werden die Schleuderscheiben mittels eines Hydraulikmotors angetrieben. Diesem Hydraulikantrieb ist eine Sensoreinrichtung zugeordnet, mittels der das Drehmoment und in einem Auswerteprogramm der ausgebrachte Massestrom ermittelt wird. Auch hierdurch lässt sich die tatsächliche Streudichte ermitteln und über eine Einstellvorrichtung die gewünschte Streudichte einstellen.

Eine weitere Verteilmaschine ist beispielsweise in der deutschen Offenlegungsschrift 198 08 764 beschrieben. Bei dieser Verteilmaschine ist im Bereich des kleinsten Querschnittes bzw. im Bereich des Öffnungsbeginns der Auslauföffnung ein Sensorelement angeordnet, welche überwachen soll, ob der Materialausfluss aus der Auslauföffnung in gewünschter Weise erfolgt. Falls Klumpen oder Papierstücke etc. die Auslauföffnung verstopfen sollten, gibt die mit dem Sensor zusammenwirkende Überwachungseinrichtung ein Signal an eine Anzeigevorrichtung, die im Bereich des Schlepperfahrers des die Maschine ziehenden Schleppers angeordnet ist. Der Schlepperfahrer muss dann, falls auf der Anzeigevorrichtung angezeigt wird, dass der Materialausfluss nicht in gewünschter Weise erfolgt, die Ursache der Verstopfung beseitigen.

Der Erfindung liegt die Aufgabe zugrunde eine Möglichkeit zu schaffen, dass automatisch die Ursache der Verstopfung beseitigt wird.

Diese Aufgabe wird erfindungsgemäß durch die kennzeichnenden Merkmale des Patentanspruches 1 gelöst. Infolge dieser Maßnahmen wird automatisch, falls von der Sensoreinrichtung an die Steuer- und Regelungseinrichtung gemeldet wird, dass die ausgebrachte Materialmenge nicht in gewünschtem Maße erfolgt, der Schieber kurzzeitig ganz in Öffnungsstellung gefahren, damit die Ursache der Verstopfung aus der größeren Auslauföffnung, die sich dann in Öffnungsendstellung befindet, freigegeben ist, so dass die Klumpen oder Papierreste etc., die die Verstopfung bzw. den nicht korrekten vollständigen Materialausfluss ermöglichen, durch die größere Auslauföffnung herausfallen können. Nach dem kurzzeitigen Öffnen wird über die Steuer- und Regelungseinrichtung der Schieber wieder in die richtige Position gefahren, damit der erforderliche Öffnungsquerschnitt der Öffnung und somit die gewünschte Materialmenge ausgebracht wird.

In einer Ausführungsform ist vorgesehen, dass die Sensoreinrichtung als Drehmomentmesseinrichtung zur Messung des Antriebselementes der Schleuderscheiben und/oder der Antriebsdrehmomente der Schleuderscheiben ausgebildet ist.

Das erforderliche Drehmoment zum Antrieb der Schleuderscheiben ist ein Maß für die Ausbringmenge. Wenn das Drehmoment abfällt, ist dies ein Hinweis darauf, dass die eingestellte Ausbringmenge nicht ausgebracht wird. Hieraus lässt sich schließen, dass die Auslauföffnung ganz oder teilweise verstopft ist.

In einer anderen Ausführung ist vorgesehen, dass Sensoreinrichtung zur Überwachung des Materialflusse aus der Auslauföffnung ausgebildet und im Bereich der Auslauföffnung angeordnet ist. Auch mittels dieser Sensoreinrichtung wird der korrekte Materialausfluss überwacht. Falls eine zu geringe Materialmenge, wie gewünscht ausgebracht wird, meldet die Sensoreinrichtung dieses an die Auswerteeinrichtung.

In einer weiteren Ausgestaltung der Erfindung ist vorgesehen, dass die Sensoreinrichtung zwischen der Auslauföffnung und der Schleuderscheibe angeordnet ist. Gemäß der Merkmale des Anspruches 5 ist die Verteilmaschine als Schleuderdüngerstreuer ausgebildet, wobei über zumindest eine motorisch angetriebene Schleuderscheibe das Material in Breitverteilung auf dem Boden verteilt wird.

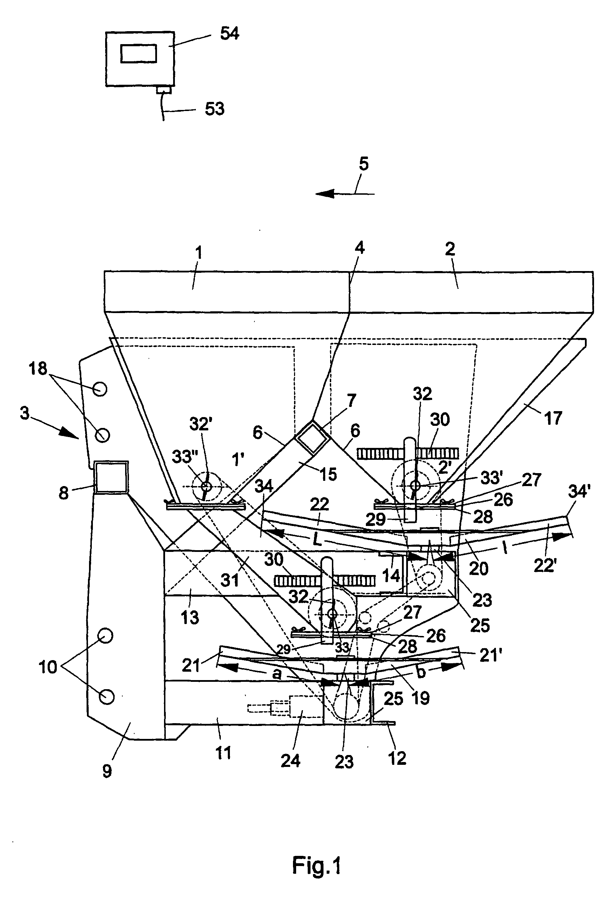

Weitere Einzelheiten der Erfindung sind den übrigen Unteransprüchen, der Beispielsbeschreibung und den Zeichnungen zu entnehmen. Hierbei zeigen
- Fig. 1: einen Schleuderstreuer in Seitenansicht und in Prinzipdarstellung,

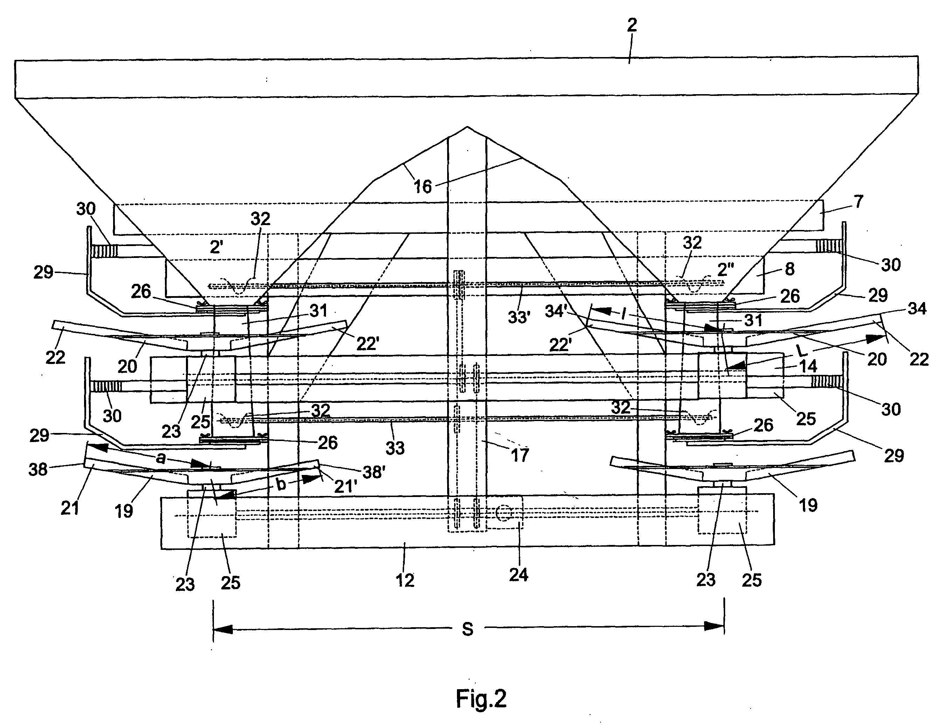

- Fig. 2: den Schleuderdüngerstreuer in der Ansicht von hinten und in Prinzipdarstellung,
- Fig. 3: die Bodenplatte mit Auslauföffnung und zugeordnetem Schieber in der Ansicht II-II in vergrößertem Maßstab und ausschnittsweiser Darstellung,
- Fig. 4: die Bodenplatte gemäß Fig. 3, jedoch mit einem anders ausgebildeten Sensorelement,
- Fig. 5: einen weiteren Schleuderstreuer in der Ansicht von hinten und in Prinzipdarstellung und
- Fig. 6: einen weiteren Schleuderstreuer in Seitenansicht und in Prinzipdarstellung.

Der Schleuderdüngerstreuer weist die beiden hintereinander angeordneten Vorratsbehälter 1 und 2 sowie den Tragrahmen 3 auf. Die beiden Vorratsbehälter 1 und 2 sind durch die Trennwand 4 voneinander getrennt. Diese die beiden Vorratsbehälter 1 und 2 trennende Trennwand 4 kann herausnehmbar, verschwenkbar, absenkbar oder wegklappbar angeordnet sein.

Die beiden Vorratsbehälter 1 und 2 sind durch das sich quer zur Fahrtrichtung 5 erstreckende dachförmige Mittelteil 6 in ihrem unteren Bereich unterteilt. Der Tragrahmen 3 weist in seinem oberen Bereich den dem quer zur Fahrtrichtung 5 verlaufende dachförmigen Mittelteil 6 zugeordnete Querträger 7 auf. Der Querträger 7 ist mit den Vorratsbehältern 1 und 2 verbunden und bildet einen Teil der Wandung der Vorratsbehälter 1 und 2 und des dachförmigen Mittelteiles 6. Der Rahmen 3 weist den oberen quer zur Fahrtrichtung 5 verlaufenden vor dem Vorratsbehälter 1 angeordneten Querbalken 8 auf. Im Abstand zueinander sind an diesem Querbalken 8 die sich nach unten erstreckenden Unterlenkerstützen 9 angeordnet, an denen die Unterlenkeranschlüsse 10 angeordnet sind. Von diesen Unterlenkerstützen 9 aus erstrecken sich jeweils nach hinten Tragstreben 11, die auf der Rückseite mit einer unteren Quertraverse 12 verbunden sind. Im Abstand zu diesen unteren nach hinten ragenden Streben 11 sind oberhalb von diesen ebenfalls nach hinten ragenden Streben 13 angeordnet, an welchen wieder eine die Rückseite diese Streben 13 verbindende Quertraverse 14 angeordnet ist.

An den nach unten ragenden Unterlenkerstützen 9 des Tragrahmens 3 sind nach hinten und oben ansteigende Stützen 15 angesetzt, und an dem Querträger 7 angreifen.

Des weiteren sind die beiden Vorratsbehälter 1 und 2 durch das weitere, jedoch in Fahrtrichtung 5 laufende dachförmige Mittelteil 16 in ihrem unteren Bereich in die Auslauftrichter 1',1'',2',2'' aufgeteilt.

Unterhalb dieses in Fahrtrichtung 5 verlaufende dachförmige Mittelteil 16 ist ein aufrecht verlaufendes, als Hohlprofil ausgebildetes Stützelement 17 angeordnet, welches mit dem Querträger 7 und dem Querbalken 8 des Tragrahmens 3 im Bereich des Oberlenkeranschlusses 18 verbunden ist. Des weiteren ist dieses Stützelement 17 mit dem in Fahrtrichtung 5 verlaufenden dachförmigen Mittelteil 16 in dessen oberen Bereich verbunden. Darüber hinaus ist dieses Stützelement 17 mit den beiden Quertraversen 12 und 14 verbunden. Der vordere Bereich des Stützelementes 17 bildet den Oberlenkeranschluss 18. Somit ist in den vorderen Teil des Stützelementes 17 der Oberlenkeranschluss 18 integriert.

Der Querbalken 8 ist unterhalb des Oberlenkeranschlusses 18 angeordnet und mit dem Stützelement 17 verbunden. Innerhalb des als Hohlprofil ausgebildeten Stützelementes 17 sind Antriebselemente für die Rührwelle und die Streueinrichtung angeordnet, wie weiter unten beschrieben ist, angeordnet.

Durch diese Ausbildung des Tragrahmens 3 mit dem Querträger 7 und dem Querbalken 8, den Stützen 15 und dem Stützelement 17 wird eine leicht bauende, tragfähige Rahmenkonstruktion für den Tragrahmen 3 geschaffen.

Die beiden Vorratsbehälter 1 und 2 sind wie vor erwähnt, durch das in Fahrtrichtung 5 sich erstreckende dachförmige Mittelteil 16 jeweils im unteren Bereich in die Auslauftrichter 1',1'',2',2'' aufgeteilt.

Jedem unteren Trichterende der Vorratsbehälter 1 und 2 ist eine Schleuderscheibe 19 bzw. 20 mit darauf angeordneten Wurfschaufeln 21,21',22,22' zugeordnet. Die Wurfschaufeln 21,21',22,22' können in Scheibenebene mit unterschiedlichen Winkeln zur Radialen eingestellt werden, um so durch die unterschiedliche Winkelanstellung der Wurfschaufeln 21,21',22,22' für unterschiedliche Materialsorten und Arbeitsbreiten eine gleichmäßige Düngerverteilung erzielen zu können.

Weiterhin kann vorgesehen sein, dass verschieden ausgebildete Wurfschaufel- oder Schleuderscheibensätze zur Anpassung an verschiedene Arbeitsbreiten- und Streubreitenbereiche zum Einsatz kommen.

Die Schleuderscheiben 19 und 20 sind aus diesem Grunde auswechselbar auf ihren Antriebswellen 23 angeordnet. Die Schleuderscheiben 19 und 20 werden über die an dem Eingangsgetriebe 24 von der Schlepperzapfwelle und über Getriebezüge angetrieben. An der unteren Quertraverse 12 sind im Abstand S von 1500 mm die beiden Winkelgetriebe 25 angeordnet. Auf den Wellen 23 der Winkelgetriebe 25 sind die Schleuderscheiben 19 auswechselbar angeordnet. An der oberen Quertraverse 14 sind ebenfalls im Abstand S von 1500 mm die Winkelgetriebe 25 angeordnet, die die Schleuderscheiben 20 tragen.

Den Trichterenden sind jeweils Dosierorgane 26 zugeordnet. Den Trichterenden des hinteren Vorratsbehälters 2 sind als Bodenplatten 27 mit Auslauföffnungen, die über Schieber 28 in ihrer Öffnungsweite einzustellen und zu verschließen sind, ausgebildete Dosierorgane 26 zugeordnet. Die Schieber 28 können mittels Einstellelementen verstellt werden. Die Öffnungsweite lässt sich über Anschlagelemente 29, die mit Skalen 30 zusammenwirken, festlegen. Es ist auch möglich, die Schieber 28 mittels elektrischer Einstellelemente elektronisch einzustellen.

Den vorderen Trichterenden ist jeweils ein das Material von den Trichterenden zu den Schleuderscheiben 19 leitendes Leitelement 31 zugeordnet. Dieses Leitelement 31 ist als Zuführschacht mit an dessen unteren Enden angeordnetem Dosierorgan 26 ausgebildet. Der Zuführschacht 31 erweitert sich stetig nach unten. Dieses Dosierorgan 26 weist eine Bodenplatte 27 mit Auslauföffnung auf. Die Auslauföffnung ist über einen Schieber 28 in ihrer Öffnungsweite einstellbar und verschließbar. Die Schieber 28 können mittels Einstellelementen verstellt werden. Die Öffnungsweite lässt sich über Anschlagelemente 29, die mit Skalen 30 zusammenwirken, einstellen. Es ist auch möglich, die Schieber 28 mittels elektronischer Einstellelemente elektrisch einzustellen.

Die Skalen 30 und Anschlagelemente 29 können seitlich der Maschine oder auf deren Rückseite angeordnet sein. Oberhalb jeder Bodenplatte 27 ist jeweils ein Rührorgan 32 auf einer Rührwelle 33 und 33', die sich durch das Stützelement hindurch erstreckt, angeordnet. Auch dem vorderen Trichterende ist eine sich durch das Stützelement erstreckende Rührwelle 33'' mit Rührelementen 32' zugeordnet.

In der Bodenplatte 27 ist die Auslauföffnung 50 angeordnet, die über den Schieber 28 zu verschließen oder in ihrer Öffnungsweite einzustellen ist. Der Schieber 28 wird mittels eines nicht dargestellten motorische Betätigungselementes verstellt. Im Öffnungsbeginn 51 der Auslauföffnung 50 ist unterhalb der Bodenplatte 27 und des Schiebers 28 das Sensorelement 52, welches als stabförmiger Aufprallsensor ausgebildet ist, angeordnet. Der Aufprallsensor 52 erstreckt sich in dem Materialausflussstrom im Bereich des Öffnungsbeginns 51 der Auslauföffnung 50. Durch den Aufprallsensor 52 wird in einfacher Weise der Materialausfluss im Bereich des Öffnungsbeginns 51 der Auslauföffnung 50 überwacht. Es wird davon ausgegangen, wenn der Öffnungsbeginn 51 der Auslauföffnung 50 nicht verstopft ist, dass dann im gesamten Bereich der Auslauföffnung der Materialausfluss den Vorgaben entspricht. Insbesondere ist die Anordnung des Sensorelementes 52 nur im Öffnungsbereich 51 beim Ausbringen von kleinen Mengen, d.h., wenn der Schieber 28 nur einen geringen Querschnitt der Auslauföffnung 50 freigibt, von Vorteil. Der Sensor 52 ist über die Kabel 53 mit Anzeigevorrichtung 54, die im Bereich des Schlepperfahrers des die Maschine ziehenden Schleppers angeordnet.

Die Anzeigevorrichtung 54 ist Bestandteil einer als Bordcomputer ausgebildeten elektronischen Steuer- und/oder Regeleinrichtung. Ebenfalls ist das motorisch betätigbare Betätigungselement für den Schieber 28 mit dem Bordcomputer 54 verbunden. Dass Sensorelement 52 überwacht die eingestellte Ausbringmenge sowie den Materialfluss aus der Auslauföffnung. Der Bordcomputer 54 ist so programmiert, dass er aus den Signalen des Sensors 52 erkennen kann, ob die gewünschte Ausbringmenge ausgebracht wird. Falls das Sensorelement 52 in Verbindung mit dem Bordcomputer 54 erkennt, dass zu wenig Material im Vergleich zu der gewünschten Ausbringmenge ausgebracht wird, wird hieraus geschlossen, dass die Auslauföffnung zumindest teilweise oder ganz verstopft ist. In diesem Falle steuert der Bordcomputer 54 die Einstellmittel des Schiebers 28 an und die motorischen Einstellmittel bringen den Schieber 28 in eine Stellung, in der die Auslauföffnung etwas mehr oder ganz geöffnet wird, d.h. dass der Schieber 28 in seiner Öffnungsendstellung gefahren wird. Durch die Freigabe der Auslauföffnung oder die Einstellung einer größeren Öffnungsweite der Auslauföffnung wird versucht, dass die Ursache der Verstopfung aus der größeren Auslauföffnung heraus fällt und somit die Ursache der Verstopfung beseitigt wird. Nach dem kurzzeitigen Öffnen wird über den Bordcomputer 54 das motorisch betätigbare Betätigungselement wiederum angesteuert, welches den Schieber 28 in die gewünschte Stellung bringt, in welcher die gewünschte Öffnungsweite der Auslauföffnung und somit die gewollte Ausbringmenge eingestellt wird.

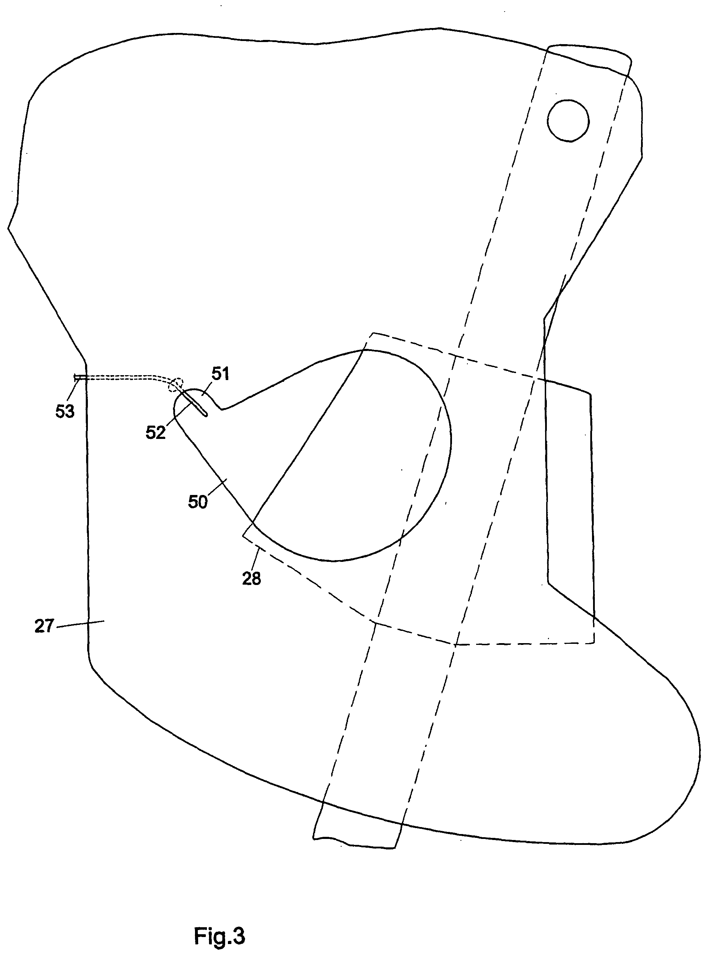

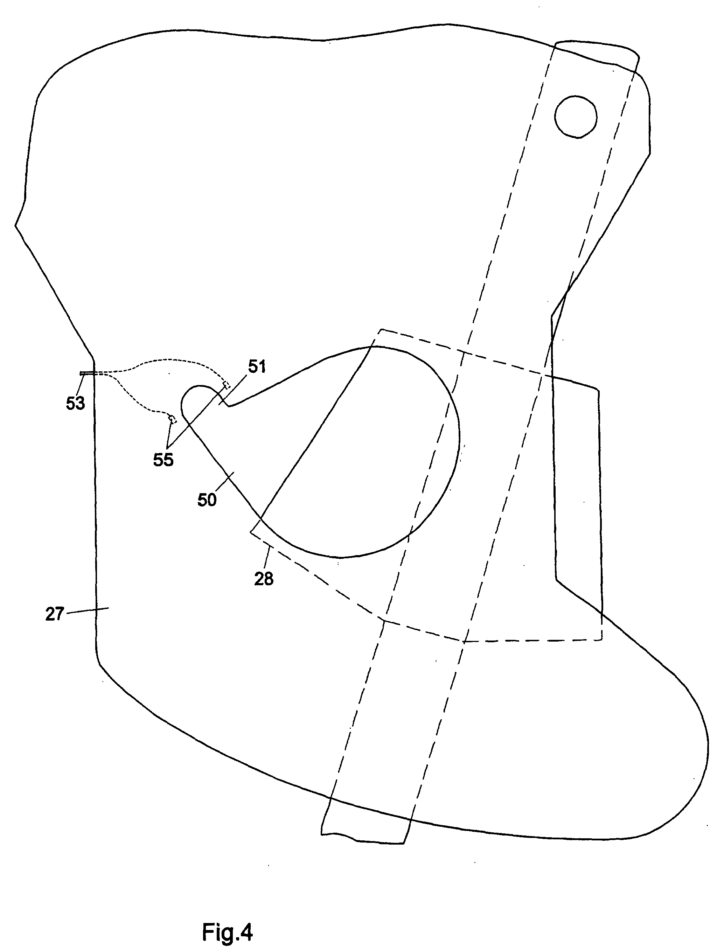

Das Ausführungsbeispiel gemäß Fig.4 unterscheidet sich von dem Ausführungsbeispiel gemäß Fig.3 dadurch, dass das Sensorelement als berührungsloser Sensor 55, beispielsweise als Lichtschranke ausgebildet ist.

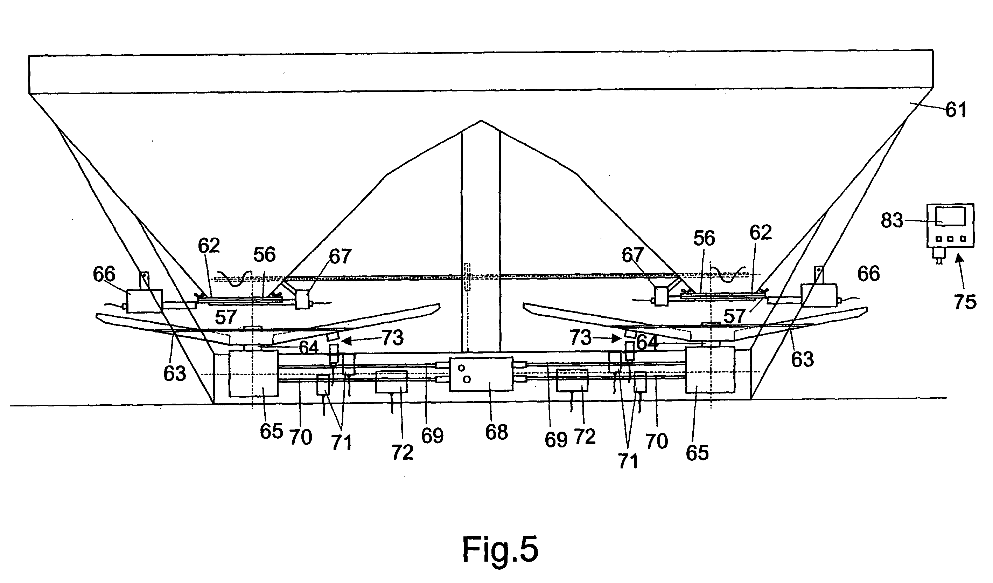

Der Schleuderdüngerstreuer gemäß Fig. 5 weist einen Vorratsbehälter 61 mit zumindest einer Dosiervorrichtung 62 auf, über die das Material in einstellbaren Mengen einer oder mehrerer rotierend angetriebenen Schleuderscheiben 63 zugeführt wird. Jede Schleuderscheibe 63 wird über die Schleuderscheibenwelle 64 und einen Hydraulikmotor 65 angetrieben. Die Schleuderscheibe 63 bzw. die Dosiervorrichtung 62 sind zueinander verstellbar, so dass die Lage des Aufgabepunktes des Düngers auf die jeweilige Schleuderscheibe 63 zu verändern ist. Die Dosiereinrichtung 62 weist in der Bodenplatte 56 angeordnete Auslauföffnungen auf, deren Öffnungsweite unter den von dem Einstellmittel 66 betätigten Schieber 57 einstellbar ist. Es sind motorische Einstellmittel 66 zu Einstellung der Dosiereinrichtung sowie motorische Einstellelemente 67 zur Einstellung des Aufgabepunktes vorgesehen. Die Hydraulikmotoren 65 werden über geeignete Einrichtungen, beispielsweise von der Hydraulikanlage des Schleppers oder einer Hydraulikpumpe, die von dem Schlepper oder mit anderen Mitteln motorisch angetrieben wird, angetrieben. Den Hydraulikmotoren 65 ist eine Regeleinrichtung 68 zugeordnet, mittels welcher die Drehzahl der Schleuderscheiben 63 gemeinsam oder unabhängig voneinander einzustellen ist.

Von dem Regelventil 68 führt jeweils eine Drucklaufleitung 69 und eine Rücklaufleitung 70 zu dem jeweiligen Hydraulikmotor 65. In der Druckleitung 69 und in der Rücklaufleitung 70 sind jeweils Druckmessgeräte 71 angeordnet. Über die Werte dieser Druckmessgeräte 71 lässt sich in Verbindung mit dem Messwert des Durchflussmessgerätes 72 das Drehmoment ermitteln. Somit bilden also die Druckmessgeräte 71 in Verbindung mit dem Durchflussmessgerät 72 eine Art Drehmomentsensor. In dem Antrieb der Schleuderscheiben 63 ist also ein Drehmomentsensor in Form der Geräte 71 und 72 angeordnet. Des weiteren ist der Schleuderscheibe 63 bzw. der Schleuderscheibenantriebswelle 64 ein Drehzahlsensor 73 zugeordnet, mittels welchem die Drehzahl zu messen ist. Des weiteren ist die elektronische Regel- und Auswerteeinheit 75 vorgesehen. Diese Auswerteeinheit 75 ist über die Leitungen und über andere Übertragungsmittel mit den einzelnen Sensoren 71, 72, 73 verbunden, so dass die von den Sensoren 71, 72, 73 ermittelten Werte in die Einrichtung 75 übertragen werden.

Des weiteren sind die Stellelemente 61, 67, 68 zur Einstellung der Dosierorgane, der Drehzahl der Schleuderscheiben 63 und zur Verlagerung des Aufgabepunktes ebenfalls über geeignete Übertragungseinrichtung oder Leitung mit der Einrichtung 75 verbunden.

Der Drehmomentsensor, bestehend aus Drucksensor 71 und Durchflusssensor 72, Drehzahlsensor 73 ihre Werte an die Einrichtung 75. In der Einrichtung 75 werden hieraus die jeweiligen Drehmomentwerte ermittelt. Das erforderliche Drehmoment, um die Schleuderscheiben anzutreiben, um die Düngemittel in Breitverteilung auf der Bodenoberfläche zu verteilen, ist ein Maß für die Ausbringmenge. In der elektronischen Steuer- und Regeleinrichtung 75 ist ein entsprechendes Expertenprogramm abgelegt, welches die Zusammenhänge zwischen den Drehmomentwerten und der Ausbringmenge ermittelt. Wenn das Drehmoment während des Ausbringens von Material abfällt, ist dies ein Hinweis darauf, dass zu wenig Material im Vergleich zu der gewünschten Ausbringmenge ausgebracht wird. Hieraus wird geschlossen, dass die Auslauföffnung zumindest teilweise oder ganz verstopft ist. In diesem Falle steuert der Bordcomputer 75 die Einstellmittel 66 des Schiebers 57 an und die motorischen Einstellmittels 66 bringen den Schieber 57 in eine Stellung, in der die Auslauföffnungen etwas mehr oder ganz geöffnet wird, d.h. der Schieber 57 wird in seine Öffnungsendstellung gefahren. Durch die Freigabe der Auslauföffnung oder die Einstellung der größeren Öffnungsweite der Auslauföffnungen wird versucht, dass die Ursache der Verstopfung aus der größeren Auslauföffnung herausfällt und somit die Ursache der Verstopfung beseitigt wird. Nach dem kurzzeitigen Öffnen wird über den Bordcomputer 75 das motorisch betätigbare Betätigungselement 66 wiederum angesteuert, welches den Schieber 57 in die gewünschte Stellung bringt, in welcher die gewünschte Öffnungsweite der Auslauföffnung und somit die gewollte Ausbringmenge einstellt wird. Falls immer noch ein zu geringes Drehmoment von dem Drehmomentsensor und der Regeleinrichtung 75 ermittelt wird, wird dieser Vorgang nochmals wiederholt. Falls immer noch nach dem Durchführen des vorbeschriebenen Verfahrensweise immer noch nicht die gewünschte Ausbringmenge ausgebracht wird, d.h., dass das erforderliche Drehmoment von den Drehmomentsensoren und dem Bordcomputer 75 ermittelt, wird ein Alarm abgegeben, so dass der Bediener der Maschine per Hand die Störung beseitigen kann bzw. muss.

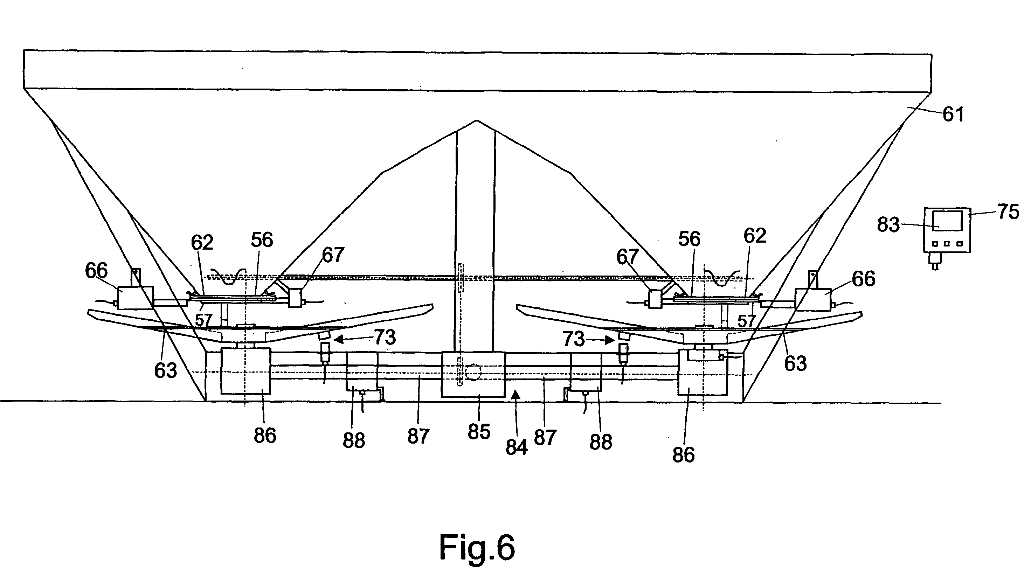

Das Ausführungsbeispiel gemäß den Fig. 6 unterscheidet sich von dem nach den Fig. 5 dadurch, das anstelle eines hydraulischen Antriebes für die Schleuderscheiben 3 ein mechanischer Antrieb vorgesehen ist. Der Schleuderdüngerstreuer gemäß Fig. 6 weist einen Vorratsbehälter 61 mit zwei Dosiervorrichtungen 62 auf, über die das Material in einstellbaren Mengen den rotierend angetriebenen Schleuderscheiben 63 zuführen. Die Schleuderscheiben 3 werden von dem Antriebsstrang 84 über das Mittelgetriebe 85 und die beiden Winkelgetriebe 86 angetrieben. Das Mittelgetriebe 85 ist mit den Winkelgetrieben 86 über die Antriebswellen 87 verbunden. Das Mittelgetriebe 85 weist eine Eingangswelle auf, die von einer Kraftquelle beispielsweise Zapfwelle eines den Schleuderdüngerstreuers tragende Schleppers angetrieben wird.

Die Dosiervorrichtung 62 ist über das Einstellmittel 66 einstellbar. Weiterhin ist die Lage der Dosierorgane 62 zu der Schleuderscheibe 63 mittels des motorischen Verstellelementes 67 einstellbar entsprechend Fig. 5 einstellbar.

Jeder Welle 87 ist eine Drehmoment-Messnabe 88 zugeordnet. Weiterhin ist ein Drehzahlsensor 73 vorgesehen, mittels welchem die Drehzahl der Schleuderscheiben 63 ermittelbar ist.

Die von den einzelnen Sensoren 88, 73 ermittelten Werte werden der elektronischen Regeleinrichtungen 75 zugeleitet. Die Auswertung und Einstellung bzw. Verstellung der Ausläufe bzw. des Schiebers erfolgt entsprechend dem Ausführungsbeispiel nach den Fig. 5. Aus den Werten wird das jeweilige Drehmoment ermittelt. Das erforderliche Drehmoment, um die Schleuderscheiben 63 anzutreiben, um die Düngemittel in Breitverteilung auf der Bodenoberfläche zu verteilen, ist ein Maß für die Ausbringmenge. In der elektronischen Steuerund Regeleinrichtung 75 ist ein entsprechendes Expertenprogramm abgelegt, welches die Zusammenhänge zwischen den Drehmomentwerten und der Ausbringmenge ermittelt. Wenn das Drehmoment während des Ausbringens von Material abfällt, ist dies ein Hinweis darauf, dass zu wenig Material im Vergleich zu der gewünschten Ausbringmenge ausgebracht wird. Hieraus wird geschlossen, dass die Auslauföffnung zumindest teilweise oder ganz verstopft ist. In diesem Falle steuert der Bordcomputer 75 die Einstellmittel 66 des Schiebers 57 an und die motorischen Einstellmittels bringen den Schieber 57 in eine Stellung, in der die Auslauföffnungen etwas mehr oder ganz geöffnet wird, d.h. der Schieber wird in seine Öffnungsendstellung gefahren. Durch die Freigabe der Auslauföffnung oder die Einstellung der größeren Öffnungsweite der Auslauföffnungen wird versucht, dass die Ursache der Verstopfung aus der größeren Auslauföffnung herausfällt und somit die Ursache der Verstopfung beseitigt wird. Nach dem kurzzeitigen Öffnen wird über den Bordcomputer das motorisch betätigbare Betätigungselement 66 wiederum angesteuert, welches den Schieber 57 in die gewünschte Stellung bringt, in welcher die gewünschte Öffnungsweite der Auslauföffnung und somit die gewollte Ausbringmenge einstellt wird. Falls immer noch ein zu geringes Drehmoment von dem Drehmomentsensor 73 und der Regeleinrichtung 75 ermittelt wird, wird dieser Vorgang nochmals wiederholt. Falls immer noch nach dem Durchführen des vorbeschriebenen Verfahrensweise immer noch nicht die gewünschte Ausbringmenge ausgebracht wird, d.h., dass das erforderliche Drehmoment von den Drehmomentsensoren 73 und dem Bordcomputer 75 ermittelt, wird ein Alarm abgegeben, so dass der Bediener der Maschine per Hand die Störung beseitigen kann bzw. muss.

## Patentansprüche

1. Verteilmaschine mit einem trichterförmigen Vorratsbehälter, dessen unterer Bereich zumindest eine durch zumindest einen Schieber in ihrer Öffnungsweite einstellbare und verschließbare Auslauföffnung angeordnet ist, wobei der Schieber mittels eines motorischen Einstellmittels betätigbar ist, wobei eine Sensoreinrichtung zur Ermittlung und/oder Überwachung des Materialausbringmenge durch die Auslauföffnung angeordnet ist, wobei die Einstellmittel von einer elektronischen Steuer- und/oder Regeleinrichtung (54,75) betätigbar sind, wobei die Sensoreinrichtung (52,55,71,72,88) mit der Steuer- und/oder Regeleinrichtung (54,75) verbunden ist und an diese Signale übermittelt, **dadurch gekennzeichnet, dass** die Steuer- und/oder Regeleinrichtung (54,75) die Einstellmittel(66) des Schiebers (28,57) ansteuern und die Auslauföffnung mehr oder ganz öffnet, wenn aufgrund der von der Sensoreinrichtung (52,55,71,71,88) übermittelten Signale die Steuer- und/oder Regeleinrichtung (54,75) aufgrund eines in der Steuerund/oder Regeleinrichtung (54,75) abgespeicherten Programms erkennt, dass die Auslauföffnung teilweise oder ganz verstopft ist.

2. Verteilmaschine nach Anspruch 1, **dadurch gekennzeichnet, dass** Sensoreinrichtung als Drehmomentmesseinrichtung (71,72,88) zur Messung des Antriebselementes der Schleuderscheiben (63) und/oder der Antriebsdrehmomente der Schleuderscheiben (63)ausgebildet ist.

3. Verteilmaschine nach Anspruch 1, **dadurch gekennzeichnet, dass** Sensoreinrichtung zur Überwachung des Materialflusse aus der Auslauföffnung ausgebildet und im Bereich der Auslauföffnung angeordnet ist.

4. Verteilmaschine nach Anspruch 1, **dadurch gekennzeichnet, dass** die Sensoreinrichtung zwischen der Auslauföffnung und der Schleuderscheibe angeordnet ist.

5. Verteilmaschine nach einem oder mehreren der vorstehenden Ansprüche, **dadurch gekennzeichnet, dass** unterhalb der Auslauföffnung eine motorisch angetriebene Schleuderscheibe zur Verteilung des durch die Auslauföffnung zugeführten Materiales angeordnet ist.

## Claims

1. Distributor having a funnel-shaped hopper, in the lower region of which is disposed at least one outlet opening, the opening width of which is adjustable and closable by means of at least one slider, wherein the slider is actuatable by means of a motor-driven adjusting means, wherein there is disposed a sensor device for determining and/or monitoring the amount of material output through the outlet opening, wherein the adjusting means are actuatable by an electronic control and/or regulating device (54, 75), wherein the sensor device (52, 55, 71, 72, 88) is connected to the control and/or regulating device and transmits signals to this latter, **characterised in that** the control and/or regulating device (54, 75) controls the adjusting means (66) of the slider (28, 57) and opens the outlet opening more or less when, on account of the signals transmitted by the sensor device (52, 55, 71, 72, 88), the control and/or regulating device (54, 75), on account of a program stored in the control and/or regulating device (54, 75), recognises that the outlet opening is blocked up partially or completely.

2. Distributor according to claim 1, **characterised in that** the sensor device is in the form of torque measuring device (71, 72, 88) for measuring the driving element of the centrifugal discs (63) and/or the driving torque of the centrifugal discs (63).

3. Distributor according to claim 1, **characterised in that** the sensor device is configured for monitoring the material flow out of the outlet opening and is disposed in the region of the outlet opening.

4. Distributor according to claim 1, **characterised in that** the sensor device is disposed between the outlet opening and the centrifugal disc.

5. Distributor according to one or several of the preceding claims, **characterised in that** a motor-driven centrifugal disc for distributing the material supplied through the outlet opening is disposed below the outlet opening.

## Revendications

1. Distributeur agricole comportant un réservoir de stockage en forme d'entonnoir, dont la zone inférieure comprend au moins une ouverture d'écoulement dont la largeur d'ouverture est réglable par le biais d'un tiroir et qui peut être fermée, le tiroir pouvant être actionné à l'aide d'un élément de réglage motorisé, avec un dispositif de détection permettant de calculer et/ou de surveiller la quantité de matière issue par l'ouverture d'écoulement. les éléments de réglage pouvant être actionnés par un dispositif de commande et/ou de réglage électronique (54, 75), le dispositif de détection (52, 55, 71, 72, 88) étant relié au dispositif de commande et/ou de réglage (54, 75) et transmettant des signaux vers celui-ci,
**caractérisé en ce que**
le dispositif de commande et/ou de réglage (54, 75) active les éléments de réglage (66) du tiroir (28, 57) et ouvre plus ou moins l'ouverture d'écoulement lorsque, en raison des signaux transmis par le dispositif de détection (52, 55, 71, 72, 88), le dispositif de commande et/ou de réglage (54, 75), grâce à un programme enregistré dans le dispositif de commande et/ou de réglage (54, 75), détecte que l'ouverture d'écoulement est en partie ou complètement obstruée.

2. Distributeur agricole selon la revendication 1,
**caractérisé en ce que**
le dispositif de détection est configuré sous forme de dispositif de mesure du couple de rotation (71, 72, 88) permettant de mesurer l'élément d'entraînement des disques centrifuges (63) et/ou les couples de rotation d'entraînement des disques centrifuges (63).

3. Distributeur agricole selon la revendication 1,
**caractérisé en ce que**
le dispositif de détection permettant de surveiller le flux de matière est configuré en dehors de l'ouverture d'écoulement et disposé dans la zone de l'ouverture d'écoulement.

4. Distributeur agricole selon la revendication 1,
**caractérisé en ce que**
le dispositif de détection est disposé entre l'ouverture d'écoulement et le disque centrifuge.

5. Distributeur agricole selon une ou plusieurs des revendications précédentes,
**caractérisé en ce qu'**
un disque centrifuge à entrainement motorisé permettant d'épandre la matière sortant par l'ouverture d'écoulement est disposé en dessous de l'ouverture d'écoulement.
